# EUROPÄISCHE PATENTSCHRIFT

(11) **EP 3 086 661 B1**
(45) Veröffentlichungstag und Bekanntmachung des Hinweises auf die Patenterteilung: **05.09.2018**
(21) Anmeldenummer: 14837060.4
(22) Anmeldetag: 23.12.2014
(51) Int. Cl.: A23L 3/3454, A23L 27/00, A23L 13/40, A23L 13/70

(54) **MARINADE ZUM TUMBELN EINES FLEISCHPRODUKTS**
MARINADE FOR TUMBLING OF A MEAT PRODUCT
MARINADE POUR LE CULBUTAGE DES PRODUITS DE VIANDE

(30) Priorität: 27.12.2013 AT 9872013
(43) Veröffentlichungstag der Anmeldung: 02.11.2016
(73) Patentinhaber: HAMA Foodservice GesmbH, 5322 Hof bei Salzburg (AT)
(72) Erfinder: HAINDL, Rudolf, 5020 Salzburg (AT); MANDL, Hans, 6542 Pfunds (AT)
(74) Vertreter: Torggler & Hofinger Patentanwälte
(86) Internationale Anmeldenummer: PCT/AT2014/000230
(87) Internationale Veröffentlichungsnummer: WO 2015/095903

(56) Entgegenhaltungen:
- DE-T2- 60 014 066
- GB-A- 2 321 173
- US-A- 4 746 522
- US-A1- 2009 208 617
- US-B1- 6 368 652
- NATHAN JARVIS ET AL: "Dried Plum Products as a Substitute for Phosphate in Chicken Marinade", JOURNAL OF FOOD SCIENCE, Bd. 77, Nr. 6, 1. Juni 2012 (2012-06-01), Seiten S253-S257, XP055183386, ISSN: 0022-1147, DOI: 10.1111/j.1750-3841.2012.02737.x

## Beschreibung

Die Erfindung betrifft eine Marinade zum Tumbeln eines Fleischprodukts, mit den Zutaten Wasser und Salz. Zudem betrifft die Erfindung ein Verfahren zum Herstellen eines Fleischprodukts durch Tumbeln. Darüber hinaus betrifft die Erfindung ein Fleischprodukt mit mindestens einem Fleischstück und einer im Fleischstück aufgenommenen Marinade.

Die Herstellung von Lebensmitteln, insbesondere Fleischprodukten, läuft immer automatisierter ab. War zunächst vor allem die Massentierhaltung dafür verantwortlich, dass sich der Kilopreis für Fleisch immer mehr verringerte, so geht es heute nicht mehr nur darum, ein möglichst günstiges Stück Fleisch anzubieten, sondern auch schon einen Teil der eigentlich vom Käufer bzw. vom Verwender durchgeführten weiteren Verarbeitungsschritte bereits vorher durchzuführen. So ist es bereits lange üblich, das Fleisch bzw. Fleischstücke in eine Marinade einzulegen. Dadurch erhält das Fleisch bereits zusätzliche Geschmacksstoffe. Zudem kann auch die Haltbarkeit positiv beeinflusst werden. Darüber hinaus wirkt ein mariniertes Fleischstück auf einen Käufer einladend.

Vor allem bei den Großproduzenten hat sich für das industrielle Marinieren bereits seit langem das sogenannte Tumbeln durchgesetzt. Dabei wird das Fleisch bzw. die Fleischstücke in einer großen Tumblingvorrichtung mitsamt der Marinade gedreht, wodurch die Marinade (Sauce) noch besser in das Fleisch aufgenommen wird. Dies hat neben der Geschmacksverbesserung und der Haltbarkeitsverlängerung für den Produzenten den zusätzlichen Vorteil, dass eine Gewichtszunahme erfolgt, wodurch ein höherer Preis bei geringerem Fleischanteil erzielbar ist. Für eine möglichst hohe Gewichtszunahme werden dafür seit längerer Zeit Phosphate eingesetzt. Diese werden bei der Wurstherstellung, bei der Schinkenherstellung und bei Tumblingfleischanwendungen eingesetzt. Der Einsatz von Phosphat dient der Verbesserung der Wasserbindefähigkeit und der Textur und Zartheit im Endprodukt. Während bei Frischfleisch die Zugabe von Salz bei der Zubereitung in erster Linie dem Geschmack dient, haben Phosphatsalze bei Fleischerzeugnissen die wesentliche Funktion der Flüssigkeitsaufnahme im Fleischprodukt. Aufgrund des höheren Gehalts der Antioxidantien wird auch eine Haltbarkeitsverlängerung erzielt. In der Fleischverarbeitung wird der Einsatz von Phosphat immer mehr hinterfragt, weshalb sich die Frage nach möglichen Alternativen immer öfter stellt. Phosphate genießen bei Ernährungsfachleuten und Konsumenten zum Teil einen zweifelhaften Ruf, da sie als Zusatzstoff mit E-Nummern behaftet sind und mit Phosphatintoleranzen und Osteoporose bei Menschen in Verbindung gebracht werden. Aus diesen Gründen besteht seit längerem das Bestreben das Phosphat lückenlos zu ersetzen, mit der Vorgabe möglichst dieselben Resultate zu erzielen. Es wurden dafür bereits verschiedene Produkte wie Transglutaminase anstelle von Phosphat getestet, jedoch mit geringem Erfolg.

Deshalb enthält die Marinade auch einen Obstextrakt mit einem Anteil an Sorbit von über 10 Gew.-%. Ein solcher Obstextrakt kann beispielsweise auf Basis von Birnen, Äpfeln, Aprikosen oder Pfirsichen hergestellt sein, da diese einen relativ hohen Sorbitanteil aufweisen. Besonders bevorzugt ist vorgesehen, dass der Obstextrakt einen Pflaumenextrakt mit einem Anteil an Sorbit von über 13 Gew.-% ist. Dazu kann beispielsweise auf den Artikel "Dried Plum Products as a Substitute for Phosphate in Chicken Marinade" aus dem "Journal of Food Sience" 2012, Vol. 77, Nr. 6 verwiesen werden. Durch den erhöhten Anteil von Sorbit (15 % bis 20 %) im Pflaumenextrakt, dient diese Marinade im Zusammenwirken mit dem Milchprotein der milchbasierten Zutat bzw. der Sahne und der Gelatine als effektives Feuchthaltemittel, welches Wasser zu binden vermag. Ein weiterer Vorteil des Pflaumenextraktes ist die verbesserte Bräunung beim Braten. Das heißt, das Braunwerden wird gefördert. Zusätzlich von Vorteil ist beim Pflaumenextrakt, dass dieser durch die enthaltene Sorbinsäure das Wasser bindet. Der Pflaumenextrakt kann auch als Pflaumensaftkonzentrat bezeichnet werden. Grundsätzlich können in diesem Extrakt oder in dem Konzentrat durchaus auch andere Inhaltsstoffe vorhanden sein. Bevorzugt besteht dieser Extrakt bzw. dieses Konzentrat rein aus den in den Pflaumen enthaltenen Inhaltsstoffen. Die Aufgabe der vorliegenden Erfindung besteht daher darin, eine gegenüber dem Stand der Technik verbesserte Marinade zu schaffen. Insbesondere soll auf die Verwendung von Phosphat verzichtet werden können und dennoch ein gutes Tumblingergebnis (Geschmacksverbesserung, Haltbarkeitsverlängerung, Gewichtszunahme, geringer Bratenverlust, zarteres Fleisch) erzielt werden.

Dies wird durch eine Marinade mit den Merkmalen von Anspruch 1 erreicht. Demnach ist vorgesehen, dass die Marinade weiters eine milchbasierte Zutat und Gelatine enthält. Das in der milchbasierten Zutat enthaltene Milchprotein bindet besonders gut das Wasser. Dasselbe gilt für die Gelatine. Da diese zusätzlichen Zutaten geschmacklich relativ neutral sind, können sie als Zusatz für eine Marinade besonders gut verwendet werden. Ein weiterer Vorteil dieser Zutaten ist der geringe Bratenverlust nach dem Tumbeln. Weiters sind diese Zutaten im Gegensatz zu Phosphat reine Naturprodukte.

Bevorzugt enthält die Marinade als weitere Zutat Stärke (Polysaccharid). Diese in der Marinade enthaltene Stärke dient vor allem der Verkapselung des Fleischprodukts. Dadurch wird eine besonders gute Porenschließung und damit ein geringerer Bratenverlust erreicht. Besonders bevorzugt ist die Stärke auf Basis von Mais hergestellt ist.

Als milchbasierte Zutat kann ein säuerliches Milchprodukt wie beispielsweise Joghurt verwendet werden. Bevorzugt ist allerdings vorgesehen, dass als milchbasierte Zutat Sahne (Süßrahm) verwendet wird.

Zusätzlich zu diesem Obst- oder Pflaumenextrakt kann die Marinade bevorzugt einen Rosmarinextrakt enthalten. Dieser Extrakt dient vor allem der Haltbarkeit und dem verbesserten Geschmack. Der Rosmarinextrakt bringt zusätzlich eine geringere Schimmelanfälligkeit.

Das Mischungsverhältnis der vorhandenen Zutaten sollte zumindest so gewählt werden, dass die Marinade gut verwendet werden kann und dass keine geschmacklichen Extreme gegeben sind. Bevorzugt ist deshalb vorgesehen, dass der Anteil an Wasser zwischen 50 und 80 Gew.-%, vorzugsweise zwischen 60 und 70 Gew.-%, liegt. Im Speziellen liegt der Anteil an Wasser bei ca. 65 Gew.-%. Natürlich ist hier zu erwähnen, dass auch in den anderen Zutaten (vor allem in der Sahne) Wasser enthalten ist. Dieser Gew.-%-Anteil ist aber hier nicht gemeint sondern nur jener Wasseranteil, der zu Beginn beim Zusammenmischen der Zutaten als reines Wasser zugegeben wird.

Weiters ist bevorzugt vorgesehen, dass der Anteil an Salz zwischen 1 und 6 Gew.-%, vorzugsweise zwischen 2 und 3,5 Gew.-%, beträgt. Im konkreten Fall liegt der Salzanteil bei 2,78 Gew.-%. Als Salz wird in diesem Zusammenhang Speisesalz, Kochsalz oder Tafelsalz verstanden, welches hauptsächlich aus Natriumchlorid besteht. Das Salz dient in der Marinade nicht nur dem Geschmack sondern es öffnet auch das Fleischeiweiß, sodass die Marinade im Gesamten besser in das Fleisch eindringen kann.

Gemäß einem weiteren bevorzugten Ausführungsbeispiel ist vorgesehen, dass der Anteil an Stärke zwischen 1 und 5 Gew.-%, vorzugsweise zwischen 1,5 und 3 Gew.-%, beträgt. Im konkreten Fall liegt der Anteil an Stärke bei 2,17 Gew.-%.

Wenn der Anteil an Obstextrakt, vorzugsweise Pflaumenextrakt, zwischen 3 und 10 Gew.-%, vorzugsweise zwischen 5 und 8 Gew.-%, beträgt, dann liegt eine besonders gute Flüssigkeitsaufnahme vor. Im bevorzugten Fall liegt der Anteil an Pflaumenextrakt bei 6,47 Gew.-%. Anders ausgedrückt beträgt der Anteil an Sorbit in der gesamten Marinade somit mindestens 0,3 Gewichtsprozent.

Der Anteil an Rosmarinextrakt an der gesamten Marinade kann recht gering gehalten werden. So liegt er beispielsweise unter 0,01 Gew.-%. Im konkreten Fall kann der Gew.-%-Anteil bei 0,0046 % liegen. Die Marinade kann aber auch rosmarinfrei sein.

Da sich die Sahne und die Gelatine als besonders guter Ersatz für die Phosphate beim Tumbeln herausgestellt haben, ist bevorzugt vorgesehen, dass der Anteil an Sahne und Gelatine zusammen 15 und 30 Gew.-%, vorzugsweise zwischen 20 und 25 Gew.-%, beträgt. Besonders bevorzugt liegt der Anteil an Sahne und Gelatine bei 23,48 Gew.-%. Sahne und Gelatine haben zueinander auch ein bevorzugtes Gew.-%-Verhältnis. Dabei ist vorgesehen, dass das Verhältnis von Sahne zu Gelatine zwischen 99,5 zu 0,5 und 97 zu 3 liegt. Als konkreter Wert kann die Gelatine 1,76 Gew.-% an der Gesamtmischung zwischen Sahne und Gelatine aufweisen. Dementsprechend liegt der Gew.-%-Anteil der Sahne bei 98,24 Gew.-%. Die Sahne selbst wiederum ist eine Emulsion von Milchfett in Wasser. Dabei ist bevorzugt vorgesehen, dass der Anteil an Milchfett an der Sahne zwischen 12 und 18 Gew.-%, vorzugsweise zwischen 13,5 und 16,5 Gew.-%, beträgt. Im konkreten Fall weist die Sahne einen Milchfettanteil von 15 % auf.

Als Sahne kann auch eine laktosefreie Sahne verwendet werden. Dies bedeutet, dass die Sahne keinen bzw. nur einen sehr geringen Anteil (weniger als 0,1 Gramm pro 100 Gramm Milch bzw. Sahne) Milchzucker (Laktose) enthält. Diese laktosefreie Sahne kann dadurch hergestellt werden, dass im Herstellungsprozess ein Enzym (Laktase) zugegeben wird, welches den Milchzucker in Schleimzucker (Galaktose) und Traubenzucker (Glukose) aufspaltet.

Schutz wird nicht nur für die Marinade begehrt sondern auch für ein Verfahren zum Herstellen eines Fleischprodukts durch Tumbeln. Dabei sind die Schritte Zerkleinern des Fleisches in Fleischstücke, Einbringen der zerkleinerten Fleischstücke in eine Tumblingvorrichtung, Einbringen einer erfindungsgemäßen Marinade in die Tumblingvorrichtung zu den zerkleinerten Fleischstücken und Tumbeln der Fleischstücke in der Marinade durch Drehen der Tumblingvorrichtung vorgesehen. Durch dieses Verfahren lässt sich auch ohne Phosphateinsatz ein sehr gutes Tumblingergebnis erzielen.

Bevorzugt kann bei diesem Verfahren vorgesehen sein, dass das Gew.-%-Verhältnis von Fleischstücken zu Marinade zwischen 70 zu 30 und 95 zu 5 liegt. Im konkreten Fall liegt dieser Gew.-%-Anteil des Fleisches bei 80,97 %, wogegen der Gew.-%-Anteil der Marinade bei 19,03% liegt. Je nach verwendeten Fleischstücken oder Fleischart kann natürlich der Gew.-%-Anteil der verwendeten Marinade auch relativ stark abweichen. Die Fleischstücke können von den verschiedenstens Arten von Tieren stammen. So kann beispielsweise Rindfleisch, Schweinefleisch, Hühnerfleisch und Putenfleisch, aber auch Fischfleisch, Muschelfleisch, usw., verwendet werden.

Für eine besonders gute Aufnahmefähigkeit ist vorgesehen, dass das Tumbeln in der Tumblingvorrichtung bei einem Vakuum von maximal 85 % durchgeführt wird.

Je nach Art des verwendeten Fleisches und je nach grundsätzlicher Aufnahmefähigkeit ist bevorzugt vorgesehen, dass das Tumbeln in der Tumblingvorrichtung für 25 bis 100 Minuten durchgeführt wird.

Beim Herstellen bzw. beim Tumbeln kann die Marinade an sich beliebig kalt oder warm sein. Bevorzugt ist allerdings vorgesehen, dass die Marinade mit einer Temperatur von 3 bis 5° C in die Tumblingvorrichtung eingebracht wird.

Klarerweise sollte das als Fleisch verwendete Ausgangsprodukt eine besonders gute Qualität aufweisen. Bevorzugt ist deshalb vorgesehen, dass der pH-Wert der Fleischstücke zwischen 5 und 8, vorzugsweise bei 7, liegt.

Um ein gutes Eindringen der Marinade in die Fleischstücke zu garantieren und dennoch beim Tumbeln keine zu großen Schäden in den Fleischstücken zu verursachen, ist bevorzugt vorgesehen, dass sich die Tumblingvorrichtung beim Tumbeln mit 5 bis 21 Umdrehungen pro Minute dreht.

Schutz wird aber nicht nur für die Marinade und für ein Tumblingverfahren begehrt, sondern auch für ein Fleischprodukt mit mindestens einem Fleischstück und einer im Fleischstück aufgenommenen erfindungsgemäßen Marinade. Natürlich muss dabei die Marinade nicht zur Gänze im Fleischstück mit aufgenommen sein, sondern sie kann das zumindest eine Fleischstück auch zum Teil umgeben.

Da nicht nur die Marinade alleine einen wichtigen Einfluss auf das Tumbeln hat, werden Folgenden auch noch weitere Aspekte, die für die Erfindung wichtig sind, angeführt.

Eine wichtige Grundlage für das phosphatfreie Tumbling ist die Fleischstruktur. Diese wird durch eine Vielzahl von Vorgängen bzw. Ausgangsbedingungen bestimmt, wie das Tieralter, die Tierart, die Geschwindigkeit der Kühlung nach dem Schlachten, der End-pH-Wert und die Dauer der Reifung. All diese Punkte haben einen Einfluss auf das Endergebnis.

Besonders wichtige Punkte bei der Anwendung der erfindungsgemäßen Marinade sind die Flüssigkeitsaufnahme und der Bratenverlust. In Testreihen mit der erfindungsgemäßen Marinade ist es gelungen, ohne Phosphate bei der Flüssigkeitsaufnahme und beim Bratenverlust, Standardkriterien zu erreichen oder diese sogar zu verbessern. Die Haltbarkeitsverlängerung ist in der Praxis für die Handelshausketten und Gastronomen ebenfalls von Bedeutung und wurde daher bei der Entwicklung berücksichtigt. Konkret wurden die besten Voraussetzungen durch folgende Rezeptur erreicht:

| Zutat | Menge | Gewichtsprozentanteil an Gesamtmenge | Gewichtsprozentanteil an der Marinade |
|---|---|---|---|
| Fleischmenge | 13 kg | 80,97 % | |
| Wasser | 1,98 kg | 12,39 % | 65,07 % |
| Sahne + Gelatine | 0,717 kg | 4,47 % | 23,48 % |
| Salz | 0,085 kg | 0,53 % | 2,78 % |
| Rosmarinextrakt | 0,0014 kg | 0,00087 % | 0,0046 % |
| Pflaumenextrakt | 0,197 kg | 1,23 % | 6,47 % |
| Maisstärke | 0,066 kg | 0,41 % | 2,17 % |

Neben der Beschaffenheit des Fleisches und neben der grundsätzlichen Rezeptur sind auch weitere Aspekte von Bedeutung. Diese werden im Folgenden näher erläutert:
Durch das Verwenden einer Marinade mit Sahne und Gelatine wird der phosphatfreie Einsatz der Marinade unterstützt. Konkret kann die Sahne und die Gelatine in Form eines Nahrungsmittels, wie es beispielsweise aus der EP 0 805 629 B1 bekannt ist, verwendet werden. Durch eine solche Marinade werden die Zartheit und die Saftigkeit der Fleischstücke verbessert. Zusätzlich kann die Marinade auch noch Molkenprotein, Pflanzenfaser (Zitronenfaser, Pflaumenfaser, usw.), Stärken, Fruchtgewürzextrakte (z.B. das Pulver getrockneter Obstsorten oder Kräutersorten) verwendet werden.

In Vergleichsbeispielen wurde auch Phosphatlake in der Marinade verwendet. Vor allem wenn diese zu stark dosiert wurde, führte dies zu einer gummiartigen Textur der Fleischstücke. Dieses Phänomen konnte bei der erfindungsgemäßen Marinade nicht festgestellt werden.

Bei der Anwendung der Marinade mit den Fleischstücken in bekannten Tumblinggeräten (z.B. Vacuum Marinater oder Turbo Tumbler), welche Vakuumsysteme mit bis zu 95 % Vakuum besitzen, ist zu beachten, dass das Vakuum beim Tumbling 82 bis 83 % nicht überschreitet. Darunter und darüber konnten keine wesentlichen Verbesserungen in Produkten festgestellt werden. Die Zeitdauer des Tumblingprozesses sollte zwischen 30 und 95 Minuten (je nach Stückgröße) ausreichend sein. Verlängerte Zeitabläufe hatten keine positiven Änderungen des Ergebnisses gebracht. Die Rotationsgeschwindigkeit der Schaber beim Einmassieren der Marinade in die Fleischstücke sollte 5 bis 21 Umdrehungen pro Minute betragen. Ist die Geschwindigkeit zu hoch, wird das Medium zu sehr zerkleinert und verliert das natürliche Aussehen und die Form.

Die Temperatur der Marinade liegt bevorzugt bei 3 bis 5°C. Die Verwendung von tiefgekühltem Fleisch ist nicht zu empfehlen. Der pH-Wert der Fleischprodukte sollte im neutralen Bereich bei einem pH-Wert von 7 liegen. Sollte der pH-Wert darunter liegen (pH-Wert von 5), kann man davon ausgehen, dass die Fleischqualität nicht besonders gut zum Tumbling geeignet ist.

Nach dem Vakuumvorgang ist es sinnvoll das behandelte, in kleinere oder größere Teile portionierte Fleisch für 24 Stunden in einem Kühlhaus bei 3 bis 5°C reifen zu lassen. Das Fleisch sollte vor dem Bratprozess an der Außenseite so trocken wie möglich sein, umso geringer und effizienter ist der Flüssigkeitsverlust beim Anbraten der Fleischstücke.

In der Marinade werden Rohstoffe verwendet, welche durch ihren hohen Antioxidantienanteil erstens eine natürliche Zutat sind und dem Produzenten mikrobiologische Sicherheit bei der Bearbeitung und Lagerung roher oder vorgegarter Fleischprodukte garantieren. Zudem wird ein Schutz vor unerwünschten Geschmacksnoten durch das Wiedererwärmen und Warmhalten fettreicher Produkte ermöglicht.

Aufgrund des natürlichen Gehalts an Antioxidantien kann die erfindungsgemäße Marinade zur Haltbarkeitsverlängerung von Fleischwaren eingesetzt werden. Die Antioxidantien verhindern das Ranzigwerden von ungesättigten Fettsäuren in rohen oder vorgegarten Fleischprodukten. Zudem unterdrücken die Antioxidantien wirksam das Wachstum von Krankheitserregern, wie Salmonellen, E.Coli-Bakterien und Listerien. Durch den natürlichen Gehalt an Sorbit wird zudem die Wasserbindung verstärkt, was sich in einem saftigen Geschmack niederschlägt und den Saftverlust beim Garen reduziert.

Zum allergrößten Teil wird Fleisch, welches einem Tumblingprozess zur Flüssigkeitsaufnahme unterzogen wurde, anschließend erhitzt. Einer der wichtigsten Gründe der Erhitzung (neben Geschmack und Zartheit) liegt in der Abtötung von eventuell vorhandenen Mikroorganismen. Bei einer Temperatur von 55°C werden diese inaktiviert. Daher wird Fleisch nach HACCP-Vorgaben auf eine Kerntemperatur von 75°C erhitzt, um ganz sicher zu sein.

Fleisch das erhitzt wird verliert mit zunehmender Erhitzung immer mehr an Flüssigkeit (Wasser) und Fett. Bei längerer Erhitzung über 100°C können bis zu 48 % Bratenverlust auftreten. Die Bratenverluste sind je nach Fleischsorte mehr oder weniger auch vom pH-Wert abhängig.

Beim Erhitzen schrumpfen zuerst die myofibrillären Proteine. Ab ca. 60 bis 75°C denaturiert das Bindegewebe. Da das Schrumpfen ein Herausdrücken von Wasser aus den fibrillären Strukturen bedeutet, die ca. 85 % Wassers des Muskels immobilisieren, tritt bei diesen Temperaturen zunehmend mehr Wasser aus dem Fleisch. Bei der Schrumpfung wird das Fleisch im Normalfall zäher, daher ist es wichtig die Fleischstruktur (Protein) vorzubehandeln, um diesen Effekt zu verringern oder gar gänzlich zu eliminieren.

Durch das Einmassieren der erfindungsgemäßen Marinade gegenüber traditionellen Phosphatmischungen wurde in sensorischen Testreihen kein Unterschied in der Behandlung der Fleischmuster festgestellt.

Bei einem konkreten Versuch wurde Hühnerfleisch in einer Tumblingvorrichtung bei einem Vakuum von 82 % einerseits in einer erfindungsgemäßen Marinade und andererseits in einer Marinade mit Phosphat für 45 Minuten getumbelt. Nach einem Zeitraum von 30 Minuten lag die Gewichtszunahme bei beiden Marinaden bei ca. 13 %. Nach 45 Minuten lag die Gewichtszunahme bei der erfindungsgemäßen Marinade bei 17,95 %, während sie beim Phosphat bei 30,73 % lag. Danach wurde dieses Hühnerfleisch für drei Stunden bei einer Kerntemperatur von 65°C gebraten. Dabei lag bei der erfindungsgemäßen Marinade der Gewichtsverlust nur bei 7,5 %, während er bei der Phosphat-Marinade bei 15,72 % lag.

Der gleiche Vorgang wurde auch bei Kalbfleisch durchgeführt. Nach 45 Minuten lag dabei die Gewichtszunahme beim Tumbeln der erfindungsgemäßen Marinade bei 23,13 %, während er bei der Phosphat-Marinade bei 25,32 % lag. Der Bratenverlust war bei der erfindungsgemäßen Marinade besonders gering im Vergleich zur Phosphat-Marinade. Dieser lag bei 20,59 % gegenüber von 30,67 % bei der Phosphat-Marinade.

Auch mit Schweinefleisch wurden dasselbe Tumbling und dasselbe Bratverfahren durchgeführt. Die Gewichtszunahme lag bei der erfindungsgemäßen Marinade bei 15,58 %, während sie bei der Phosphat-Marinade bei 28,57 % lag. Auch hier war der Bratenverlust bei der erfindungsgemäßen Marinade wesentlich besser. Dieser lag nur bei 18,92 %, während er bei der Phosphat-Marinade bei 24,11 % nach drei Stunden braten bei einer Kerntemperatur von 65°C lag.

Die Zellstruktur von Fleisch und Fisch ist sehr empfindlich, weshalb bei jedem organischen Stoff hohe Temperaturen schnell einen großen Schaden daran anrichten können. Die Garmethoden haben sich im Laufe der Zeit weiterentwickelt. Dabei gibt es für jede Garmethode das passende Equipment. Durch die neuen Apparate und Küchentechniken (Sous Vide) eröffnen sich neue Möglichkeiten, den Bratenverlust zu reduzieren. Dieser Verlust wird nach Möglichkeit mit dem Tumbling aufgefangen oder reduziert.

Grundsätzlich enthält rohes Fleisch eine sehr geordnete Struktur. Drei Bindegewebs-schichten umschließen zusätzlich Muskel-, Muskelfaserbündel und Muskelfasern. Rohes Fleisch hat eine hohe Elastizität und Festigkeit, sodass Fleisch beim Hineinbeißen schwer zu durchtrennen ist. Die hochgeordnete Struktur lässt auch Stoffe wie Salz usw. nur schwer eindringen. Zudem steht einem Eindringen die sich zwar langsam auflösende aber immer noch existierende Lipiddoppelschicht der Zellmembranen entgegen.

Zerkleinern, zerschneiden, zerquetschen, zerreißen und wolfen zerstören diese geordnete Struktur. Durch die Zerkleinerung (größere Oberfläche) ist sowohl der Bratenverlust als auch die Kontaminierung der Fleischstücke rascher. Durch Einbringung der erfindungsgemäßen Marinade mit einem Anteil von 5 % bis 15 % Oxidantien in einen Tumbler kann der Bratenverlust sowie die Haltbarkeit positiv beeinflusst werden. Gleichzeitig wurde festgestellt, dass das Abtrocknen der Oberfläche vor dem Anbraten den Bratenverlust verringern kann. Die besten Ergebnisse werden mit folgender Technik erzielt:
Die Fleischstücke sollten zunächst an der Außenseite so trocken wie möglich sein. Vorteilhaft ist es zudem, wenn das Fleisch auf einem Gitterrost über Nacht im Kühlhaus bei 3° bis 5° Celsius liegt.

Dann wird das Fleisch entnommen und gleichmäßig auf ein gefettetes Bratenblech oder auf eine Bratenstraße verteilt und bei 220° bis 300° Celsius in 3-5 Minuten an allen Seiten angebraten. Mit dieser Anbrattechnik bleibt der Bratenverlust wesentlich geringer (2,5 % bis 4 %) als bei herkömmlichen Anwendungen.

Anschließend wird das angebratene Fleisch in Vakuumsäcke oder Vakuumschalen, welche mit einem Deckel versehen werden, mit 90 % Vakuum versiegelt. Die Säcke oder Schalen mit dem Fleisch werden dann im Wasserbad oder über Dampf bei 58° bis 75° Celsius über längere Zeit gegart. Diese Garmethode hat den Vorteil, dass das Fleisch nicht mit Wasser in Berührung kommt. Dadurch entsteht kein Geschmacksverlust und es treten keine Qualitätseinbußen auf. Durch das Niedertemperaturgaren über längeren Zeitraum und dem Einsatz der erfindungsgemäßen phosphatfreien Marinade konnte die Fleischqualität wie die Regenerierbarkeit von vorgekochten und auf 5° Celsius gekühlten Fleischgerichten wesentlich verbessert werden.

## Patentansprüche

1. Marinade zum Tumbeln eines Fleischprodukts, mit den Zutaten Wasser und Salz, wobei die Marinade einen Obstextrakt mit einem Anteil an Sorbit von über 10 Gew.-% enthält, **dadurch gekennzeichnet, dass** die Marinade weiters eine milchbasierte Zutat und Gelatine enthält.

2. Marinade nach Anspruch 1, **dadurch gekennzeichnet, dass** die Marinade Stärke, vorzugsweise auf Basis von Mais, enthält.

3. Marinade nach Anspruch 1 oder 2, **dadurch gekennzeichnet, dass** die milchbasierte Zutat Sahne ist.

4. Marinade nach einem der Ansprüche 1 bis 3, **dadurch gekennzeichnet, dass** der Obstextrakt einen Pflaumenextrakt mit einem Anteil an Sorbit von über 13 Gew.-% ist.

5. Marinade nach einem der Ansprüche 1 bis 4, **dadurch gekennzeichnet, dass** der Anteil an Wasser zwischen 50 und 80 Gew.-%, vorzugsweise zwischen 60 und 70 Gew.-%, beträgt.

6. Marinade nach einem der Ansprüche 1 bis 5, **dadurch gekennzeichnet, dass** der Anteil an Salz zwischen 1 und 6 Gew.-%, vorzugsweise zwischen 2 und 3,5 Gew.-%, beträgt.

7. Marinade nach einem der Ansprüche 2 bis 6, **dadurch gekennzeichnet, dass** der Anteil an Stärke zwischen 1 und 5 Gew.-%, vorzugsweise zwischen 1,5 und 3 Gew.-%, beträgt.

8. Marinade nach einem der Ansprüche 1 bis 7, **dadurch gekennzeichnet, dass** der Anteil an Obstextrakt, vorzugsweise Pflaumenextrakt, zwischen 3 und 10 Gew.-%, vorzugsweise zwischen 5 und 8 Gew.-%, beträgt.

9. Marinade nach einem der Ansprüche 3 bis 8, **dadurch gekennzeichnet, dass** der Anteil an Sahne und Gelatine zusammen zwischen 15 und 30 Gew.-%, vorzugsweise zwischen 20 und 25 Gew.-%, beträgt.

10. Marinade nach Anspruch 9, **dadurch gekennzeichnet, dass** das Verhältnis von Sahne zu Gelatine zwischen 99,5 zu 0,5 und 97 zu 3 liegt.

11. Marinade nach einem der Ansprüche 1 bis 10, **dadurch gekennzeichnet, dass** die, vorzugsweise laktosefreie, Sahne eine Emulsion von Milchfett in Wasser ist und der Anteil an Milchfett an der Sahne zwischen 12 und 18 Gew.-%, vorzugsweise zwischen 13,5 und 16,5 Gew.-%, beträgt.

12. Verfahren zum Herstellen eines Fleischprodukts durch Tumbeln, mit den Schritten:
- Zerkleinern des Fleisches in Fleischstücke,
- Einbringen der zerkleinerten Fleischstücke in eine Tumblingvorrichtung,
- Einbringen einer Marinade nach einem der Ansprüche 1 bis 11 in die Tumblingvorrichtung zu den zerkleinerten Fleischstücken und
- Tumbeln der Fleischstücke in der Marinade durch Drehen der Tumblingvorrichtung.

13. Verfahren nach Anspruch 12, **dadurch gekennzeichnet, dass** das Gew.-%-Verhältnis von Fleischstücken zu Marinade zwischen 70 zu 30 und 95 zu 5 liegt.

14. Fleischprodukt mit mindestens einem Fleischstück und einer im Fleischstück aufgenommenen Marinade nach einem der Ansprüche 1 bis 11.

## Claims

1. A marinade for tumbling a meat product, with the ingredients water and salt, wherein the marinade contains a fruit extract with a proportion of sorbitol of over 10% by weight, **characterized in that** the marinade further contains a milk-based ingredient and gelatin.

2. The marinade according to claim 1, **characterized in that** the marinade contains starch, preferably based on corn.

3. The marinade according to claim 1 or 2, **characterized in that** the milk-based ingredient is cream.

4. The marinade according to one of the claims 1 to 3, **characterized in that** the fruit extract is a plum extract with a proportion of sorbitol of over 13% by weight.

5. The marinade according to one of the claims 1 to 4, **characterized in that** the proportion of water is between 50% and 80% by weight, preferably between 60% and 70% by weight.

6. The marinade according to one of the claims 1 to 5, **characterized in that** the proportion of salt is between 1% and 6% by weight, preferably between 2% and 3.5% by weight.

7. The marinade according to one of the claims 2 to 6, **characterized in that** the proportion of starch is between 1% and 5% by weight, preferably between 1.5% and 3% by weight.

8. The marinade according to one of the claims 1 to 7, **characterized in that** the proportion of fruit extract, preferably plum extract, is between 3% and 10% by weight, preferably between 5% and 8% by weight.

9. The marinade according to one of the claims 3 to 8, **characterized in that** the proportion of cream, together with gelatin, is between 15% and 30% by weight, preferably between 20% and 25% by weight.

10. The marinade according to claim 9, **characterized in that** the ratio of cream to gelatin is between 99.5 to 0.5 and 97 to 3.

11. The marinade according to one of the claims 1 to 10, **characterized in that** the, preferably lactose-free, cream is an emulsion of milkfat in water and the proportion of milkfat to the cream is between 12% and 18% by weight, preferably between 13.5% and 16.5% by weight.

12. A method of producing a meat product by tumbling, including the steps:
- comminuting the meat into meat pieces,
- introducing the comminuted meat pieces into a tumbling apparatus,
- introducing a marinade according to one of the claims 1 to 11 into the tumbling apparatus for the comminuted meat pieces, and
- tumbling the meat pieces in the marinade by rotating the tumbling apparatus.

13. The method according to claim 12, **characterized in that** the weight percent ratio of meat pieces to marinade is between 70 to 30 and 95 to 5.

14. A meat product having at least one meat piece and a marinade according to one of the claims 1 to 11 absorbed in the meat piece.

## Revendications

1. Marinade pour le malaxage d'un produit de viande, avec les ingrédients eau et sel, dans laquelle la marinade contient un extrait de fruit avec une proportion de sorbitol de plus de 10 % en poids, **caractérisée en ce que** la marinade contient en outre un ingrédient à base de lait et de la gélatine.

2. Marinade selon la revendication 1, **caractérisée en ce que** la marinade contient de l'amidon, de préférence à base de maïs.

3. Marinade selon la revendication 1 ou 2, **caractérisée en ce que** l'ingrédient à base de lait est de la crème.

4. Marinade selon l'une des revendications 1 à 3, **caractérisée en ce que** l'extrait de fruit est un extrait de prune avec une proportion de sorbitol de plus de 13 % en poids.

5. Marinade selon l'une des revendications 1 à 4, **caractérisée en ce que** la proportion d'eau se situe entre 50 et 80 % en poids, de préférence entre 60 et 70 % en poids.

6. Marinade selon l'une des revendications 1 à 5, **caractérisée en ce que** la proportion de sel se situe entre 1 et 6 pour cent en poids, de préférence entre 2 et 3,5 pour cent en poids.

7. Marinade selon l'une des revendications 2 à 6, **caractérisée en ce que** la proportion d'amidon se situe entre 1 et 5 % en poids, de préférence entre 1,5 et 3 % en poids.

8. Marinade selon l'une des revendications 1 à 7, **caractérisée en ce que** la proportion d'extrait de fruit, de préférence d'extrait de prune, se situe entre 3 et 10 % en poids, de préférence entre 5 et 8 % en poids.

9. Marinade selon l'une des revendications 3 à 8, **caractérisée en ce que** la proportion de crème et de gélatine ensemble se situe entre 15 et 30 % en poids, de préférence entre 20 et 25 % en poids.

10. Marinade selon la revendication 9, **caractérisée en ce que** le rapport entre la crème et la gélatine se situe entre 99,5 à 0,5 et 97 à 3.

11. Marinade selon l'une des revendications 1 à 10, **caractérisée en ce que** la crème, de préférence sans lactose, est une émulsion de matière grasse du lait dans de l'eau et la proportion de matière grasse du lait par rapport à la crème se situe entre 12 et 18 % en poids, de préférence entre 13,5 et 16,5 pour cent en poids.

12. Procédé pour fabriquer un produit de viande par malaxage, avec les étapes de :
- broyage de la viande en morceaux de viande,
- introduction des morceaux de viande broyés dans un dispositif de malaxage,
- introduction d'une marinade selon l'une des revendications 1 à 11 dans le dispositif de malaxage vers les morceaux de viande broyés et
- malaxage des morceaux de viande dans la marinade par rotation du dispositif de malaxage.

13. Procédé selon la revendication 12, **caractérisé en ce que** le rapport du pourcentage en poids des morceaux de viande par rapport à la marinade se situe entre 70 à 30 et 95 à 5.

14. Produit de viande avec au moins un morceau de viande et une marinade absorbée dans le morceau de viande selon l'une des revendications 1 à 11.
